(19) Europäisches Patentamt
European Patent Office
Office européen des brevets

(11) **EP 2 039 589 A1**

(12) **EUROPEAN PATENT APPLICATION**
published in accordance with Art. 153(4) EPC

(43) Date of publication:
**25.03.2009 Bulletin 2009/13**

(51) Int Cl.:
**B62D 6/00** *(2006.01)*    **B62D 5/04** *(2006.01)*

(21) Application number: **07742310.1**

(22) Date of filing: **24.04.2007**

(86) International application number:
**PCT/JP2007/058875**

(87) International publication number:
**WO 2007/129573 (15.11.2007 Gazette 2007/46)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **08.05.2006 JP 2006129331**

(71) Applicant: **NSK Ltd.
Tokyo 141-8560 (JP)**

(72) Inventor: **YAMAMOTO, Satoshi c/o NSK Ltd.
Gunma 371-8527 (JP)**

(74) Representative: **Grünecker, Kinkeldey,
Stockmair & Schwanhäusser
Anwaltssozietät
Leopoldstrasse 4
80802 München (DE)**

(54) **CONTROLLER FOR ELECTRIC POWER STEERING DEVICE**

(57)    There is provided a control system for an electronic power steering. The control system includes: a SAT estimating portion for estimating a SAT of a vehicle by inputting an angular velocity and an angular acceleration of a motor, a steering torque, and a current command value; and a motor current correction value calculating portion for deciding a running state of the vehicle based on a SAT estimation value estimated by the SAT estimating portion, a vehicle speed, and a steering angle, and correcting the current command value by calculating a motor current correction value based on the SAT estimation value in accordance with the running state. According to this configuration, an offset torque can be always corrected precisely irrespective of a road surface situation or a driving condition such as a straight line running, and thus a comfortable steering performance can be attained by lessening driver's fatigue.

FIG. 10

**Description**

TECHNICAL FIELD

The present invention relates to a control system for an electronic power steering for applying a steering assisting force to a steering system of a vehicle by driving a motor and, more particularly, to a control system for a high-performance electronic power steering that is equipped with a function of correcting an offset torque.

BACKGROUND ART

The electronic power steering applies an assist load to (assists) the steering unit of the vehicle by a turning force of a motor. This electronic power steering transfers a driving force of the motor as the assist load to a steering shaft or a rack shaft through a transfer mechanism such as a gear, a belt, or the like via a reduction gear. In order to generate an assist torque (steering assisting force) precisely, such electronic power steering in the prior art employs a feedback control of a motor current. The feedback control controls a voltage applied to the motor such that a difference between a current command value and a current detected value of the motor is reduced. Normally the voltage applied to the motor is controlled by adjusting a duty ratio in Pulse-Width Modulation (PWM) control.

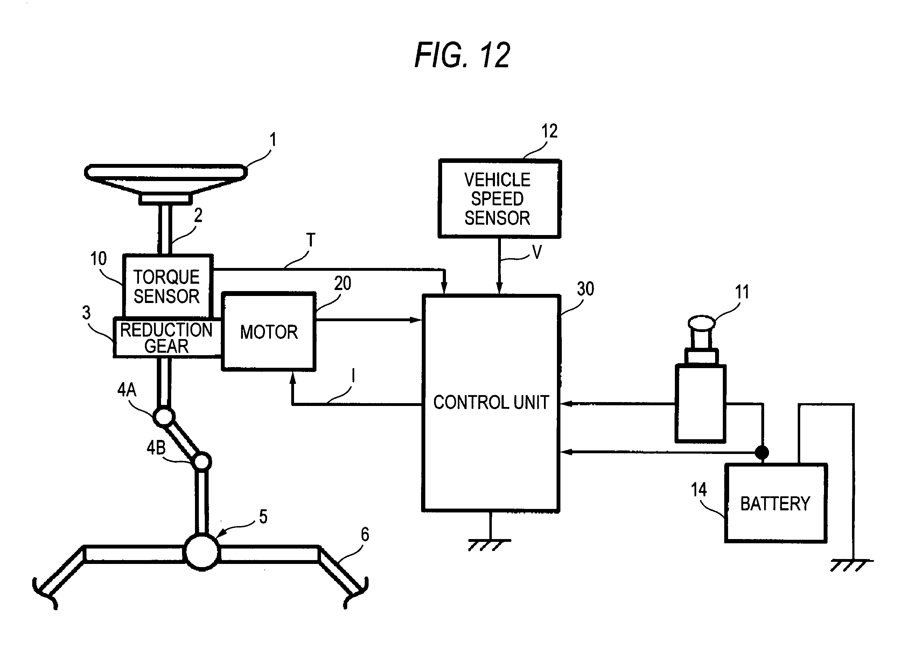

Here, a common configuration of the electronic power steering is explained with reference to FIG 12 hereunder. A column shaft 2 of a steering wheel 1 is coupled to tie-rods 6 of steered wheels via a reduction gear 3, universal joints 4A and 4B, and a rack & pinion mechanism 5. A torque sensor 10 for detecting a steering torque of the steering wheel 1 is provided to the column shaft 2. A motor 20 used to assist a steering force of the steering wheel 1 is coupled to the column shaft 2 via the reduction gear 3. An electric power is supplied from a battery 14 to a control unit 30 that controls the steering unit, and also an ignition signal is input from an ignition key 11 to the control unit 30. The control unit 30 calculates a steering assist command value I of the assist command based on a steering torque T detected by the torque sensor 10 and a vehicle speed V detected by a vehicle speed sensor 12 by using an assist map, or the like, and then controls a current supplied to the motor 20 based on the calculated steering assist command value L

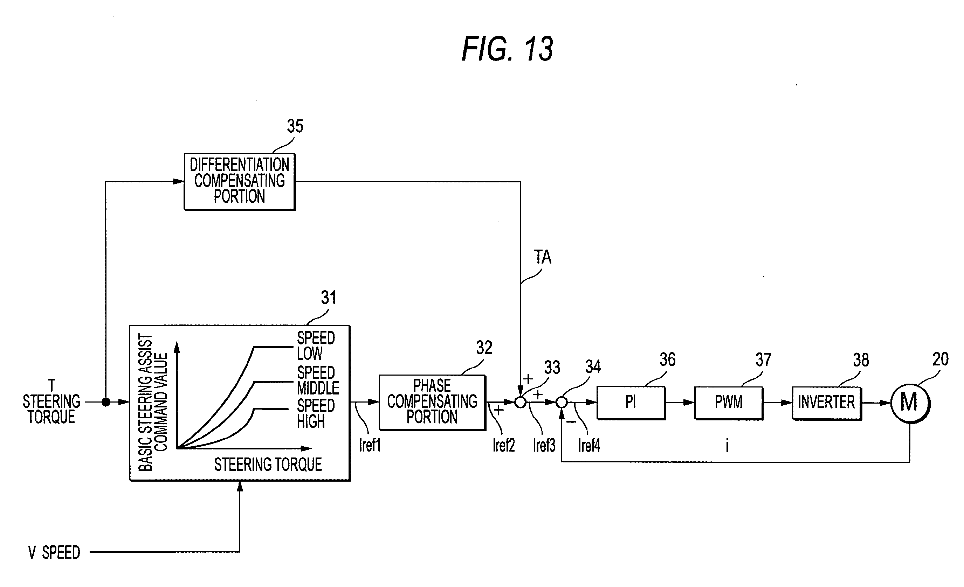

The control unit 30 is composed mainly of CPU (or MPU or MCU). Common functions executed by a program in the inside of CPU are given as shown in FIG 13.

Functions and operations of the control unit 30 will be explained with reference to FIG 13 hereunder. The steering torque T detected/input by the torque sensor 10 and the vehicle speed V detected/input by the vehicle speed sensor 12 are input into a steering assist command value calculating portion 31, and then a basic steering assist command value Iref1 is calculated. The basic steering assist command value Iref1 calculated by the steering assist command value calculating portion 31 is subjected to the phase compensation by a phase compensating portion 32 so as to enhance a stability of the steering system. Then, a steering assist command value Ire2 whose phase is compensated is input into an adding portion 33. Also, the steering torque T is input into a differentiation compensating portion 35 of a feed forward system to increase a response speed, and a steering torque TA that is subjected to the differentiation compensation is input into the adding portion 33. The adding portion 33 adds the steering assist command value Iref2 and the steering torque TA, and inputs a current command value Iref3 (= Iref2 + TA) as the added result into a subtracting portion 34 for the feedback use.

The subtracting portion 34 calculates a deviation (Iref3 - i) between the current command value Iref3 and a motor current i that is being fed back as a current command value Iref4. The current command value Iref4 is PI-controlled by a PI controlling portion 36, and is input into a PWM controlling portion 37 where a duty ratio is calculated, and then the motor 20 is PWM-driven via an inverter 38. The motor current of the motor 20 is detected by a motor current detecting portion (not shown), then is input into the subtracting portion 34 to be used for subtracting, and then is fed back.

In such electronic power steering, such a situation must be prevented that, when the torque sensor detects a vibration applied from the vehicle body side, a vibration generated by an engine, or the like, for example, the steering operation becomes unstable. For this purpose, in JP-A-2001-39324 (Patent Literature 1), for example, there is provided a gain limiting means for executing a process in which a gain of a differentiating means that compensates the steering torque by a derivation is set to 0 when an output voltage value of the torque sensor is smaller than a threshold value.

Patent Literature 1: JP-A-2001-39324

DISCLOSURE OF THE INVENTION PROBLEMS THAT THE INVENTION IS TO SOLVE

However, in the system set forth in Patent Literature 1, the steering torque being input from the road surface such as inclined road surface that is inclined in the road width direction, road surface whose coefficient of friction is different between the left and right wheels, so-called split-$\mu$ road surface, or the like during the running or the input torque being generated when an air pressure in the tire is different between left and right wheels is applied to the steering system. In this situation, when this torque is detected by the torque sensor, a differential gain is set to 0 and as a result such an event can be prevented that the assisting force is changed unsteadily. However, a constant torque input that is transferred continuously to the steering system from the road surface or the vehicle body side cannot be cancelled.

The present invention has been made in view of above circumstances, and it is an object of the present invention to provide a control system for an electronic power steering, capable of lessening driver's fatigue and attaining a comfortable steering performance by always correcting precisely an offset torque irrespective of a road surface situation or a driving condition such as a straight line running, or the like.

MEANS FOR SOLVING THE PROBLEMS

The above object of the present invention can be achieved by following configuration.

(1) In a control system for an electronic power steering that drives and controls a motor by feedback control, the control system includes:

a steering assist command value calculating portion for calculating and outputting a current command value of the motor, which applies a steering assisting force to a steering mechanism, based on a steering torque and a vehicle speed;
a SAT estimating portion for estimating a SAT of a vehicle by inputting an angular velocity and an angular acceleration of the motor, the steering torque, and the current command value; and
a motor current correction value calculating portion for deciding a running state of the vehicle based on a SAT estimation value estimated by the SAT estimating portion, the vehicle speed, and a steering angle, and correcting the current command value by calculating a motor current correction value based on the SAT estimation value in accordance with the running state.

(2) In the control system according to (1), the motor current correction value calculating portion is configured to: decide a steering state by deciding a straight running state; and calculate the motor current correction value after a predetermined time elapsed in a case where the steering angle is equal to or less than a predetermined value 1, an absolute value of the SAT estimation value is equal to or less than a predetermined value 2, and the vehicle speed is equal to or more than a predetermined value 3.

(3) In the control system according to (1), the motor current correction value calculating portion is configured to: decide the running state using the steering torque instead of the SAT estimation value.

(4) In a control system for an electronic power steering that drives and controls a motor by feedback control, the control system includes:

a steering assist command value calculating portion for calculating and outputting a current command value of the motor, which applies a steering assisting force to a steering mechanism, based on a steering torque and a vehicle speed;
a SAT sensor for detecting a SAT of a vehicle; and
a motor current correction value calculating portion for deciding a running state of the vehicle based on a SAT value detected by the SAT sensor, the vehicle speed, and a steering angle, and correcting the current command value by calculating a motor current correction value based on the SAT value in accordance with the running state.

(5) In the control system according to (4), the motor current correction value calculating portion is configured to: decide a steering state by deciding a straight running state; and calculate the motor current correction value after a predetermined time elapsed in a case where the steering angle is equal to or less than a predetermined value 1, an absolute value of the SAT value is equal to or less than a predetermined value 2, and the vehicle speed is equal to or more than a predetermined value 3.

(6) In the control system according to (4), wherein the motor current correction value calculating portion is configured to: decide the running state using the steering torque instead of the SAT value.

ADVANTAGE OF THE INVENTION

According to the control system for the electronic power steering of the present invention, the offset torque of the power steering unit can always be corrected precisely irrespective of the road surface situation generated depending on a vehicle factor, or the like or the driving condition such as the straight line running, or the like. Therefore, the comfortable high-performance electronic power steering capable of improving the steering feeling to have no influence on the steering operation can be provided.

In the present invention, the torque applied to the steering shaft (column shaft) during the straight line running is regarded as the offset torque, but such torque is not regarded as the offset torque in a situation that an input from the steering is balanced with a friction of the steering mechanism. Therefore, the correction torque can always be calculated precisely

## BRIER DESCRIPTION OF THE DRAWINGS

FIG.1 is a block diagram showing an example of a configuration of a control system as a premise of the present invention.
FIG.2 is a block diagram showing an example of a configuration of a SAT estimation feedback portion.
FIG.3 is a view showing an example of the characteristic of a friction estimating portion.
FIG.4 is a view showing an example of the characteristic of a speed sensitive gain.
FIG.5 is a characteristic diagram showing a relationship between SAT based on a speed change and a steering angle.
FIG.6 is a flowchart showing an example of an operation in sensing a steering center.
FIG.7 is a flowchart showing an example of an operation in detecting a steering angle.
FIG.8 is a flowchart showing an example of an operation of a motor current correction value calculating portion.
FIG.9 is a characteristic diagram showing an example of a gain calculation map.
FIG.10 is a block diagram showing an example of a configuration of a control system according to the present invention.
FIG.11 is a flowchart showing an example of an operation of the present invention.
FIG.12 is a view showing an example of a common configuration of an electronic power steering.
FIG.13 a block diagram showing an example of a configuration of a control unit.

## DESCRIPTION OF REVERENCE NUMERALS AND SIGNS

| 1 | | steering wheel |
|---|---|---|
| 2 | | column shaft |
| 3 | | reduction gear |
| 10, 40 | | torque sensor |
| 12, 41 | | vehicle speed sensor |
| 14 | | battery |
| 20,60 | | motor |
| 30 | | control unit |
| 31, 42 | | steering assist command value calculating portion |
| 32 | | phase compensating portion |
| 35, 43 | | differentiation compensating portion |
| 36 | | PI controlling portion |
| 37 | | PWM controlling portion |
| 38 | | inverter |
| 50 | | SAT estimation feedback portion |
| 51 | | convergence controlling portion |
| 52 | | robust stabilization compensating portion |
| 61 | | motor driving portion |
| 62 | | motor angular velocity estimating portion |
| 63 | | motor angular acceleration estimating portion |
| 64 | | motor characteristic compensating portion |
| 70, 70A | | motor current correction value calculating portion |

## BEST MODE FOR CARRYING OUT THE INVENTION

The steering torque being input from the road surface such as inclined road surface that is inclined in the road width direction, so-called split-$\mu$ road surface, or the like during the running or the input torque being generated when an air pressure in the tire is different between left and right wheels is applied to the steering system. In the prior art, when such torque is detected by the torque sensor, a differential gain of the feed forward system is set to 0, and thus such a situation is prevented that the assisting force is changed unsteadily (see Patent Literature 1). However, such a problem still exists that a constant torque input that is transferred continuously to the steering system from the road surface or the vehicle body side cannot be cancelled by this approach.

In order to solve the above problem, in the invention set forth in Patent Application No.2005-262050 (referred to as a "prior application" hereinafter) according to this applicant, a torque applied to the column shaft during the straight line running of a vehicle is regarded as the offset, and a correction torque is calculated based on the offset torque. Then, the correction torque is converted into a current command value, and a correction is made gradually. Also, the offset torque generated during the straight line running is estimated in calculating the correction torque, and a correction is made directly on the current command value until the offset torque becomes 0. The present invention is made from the invention according to the prior application as the premise, and firstly the invention of the prior application will be explained hereunder.

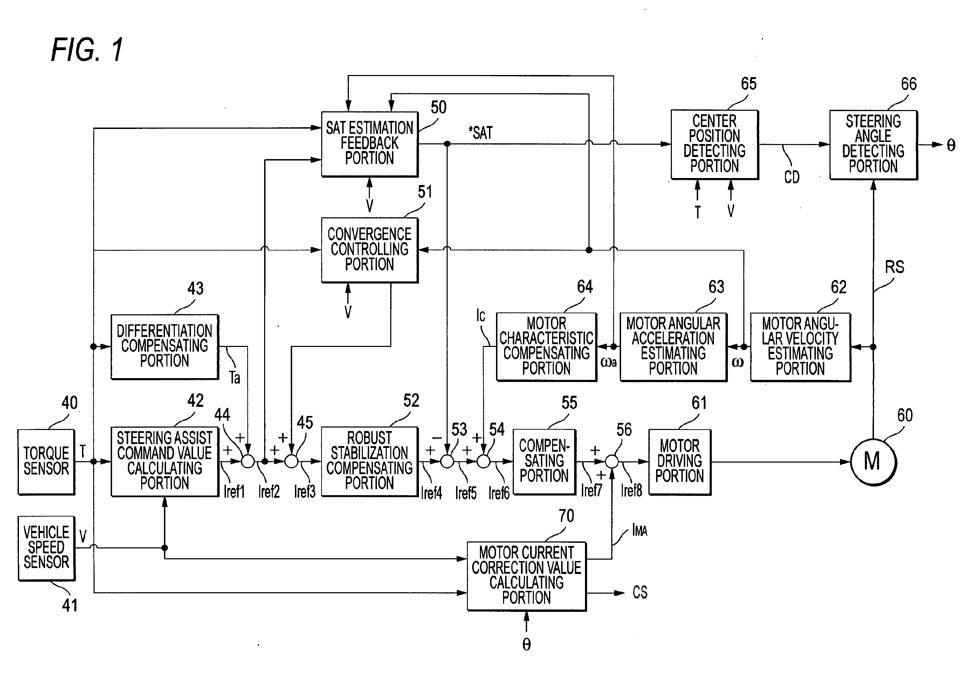

FIG.1 shows an example of a configuration of the control system as the premise of the present invention. The steering torque T from a torque sensor 40 is input into a steering assist command value calculating portion 42, a differentiation compensating portion 43, a SAT estimation feedback portion 50, a convergence controlling portion 51, a center position detecting portion 65, and a motor current correction value calculating portion 70. The speed from a vehicle speed sensor 41 is input into the steering assist command value calculating portion 42, the SAT estimation feedback portion 50, the convergence controlling portion 51, the center position detecting portion 65, and the motor current correction value calculating portion 70. The steering assist command value Iref1 calculated by the steering assist command value calculating portion 42 is added to a differentiation compensation value Ta from the differentiation compensating portion 43 by an adding portion 44. The steering assist command value Iref2 as the added value is input into the SAT estimation feedback portion 50 and also input into an adding portion 45. A steering assist command value Iref3 as the added result of the adding portion 45 is input into a robust stabilization compensating portion 52. A steering assist command value Iref4 from the robust stabilization compensating portion 52 is input into an adding portion 53, and a current command value Iref5 as the added result is input into a compensating portion 55 via an adding portion 54. Then, a current command value Iref7 that is compensated by the compensating portion 55 is input into a motor driving portion 61 via an adding portion 56, and then a motor 60 is driven by the motor driving portion 61.

An angular velocity $\omega$ of the motor 60 is estimated by a motor angular velocity estimating portion 62, and the estimated angular velocity m is input into a motor angular acceleration estimating portion 63 and the SAT estimation feedback portion 50. Then, an angular acceleration $\omega_a$ estimated by the motor angular acceleration estimating portion 63 is input into a motor characteristic compensating portion 64 and the SAT estimation feedback portion 50. A SAT estimation value *SAT estimated by the SAT estimation feedback portion 50 is input into the center position detecting portion 65 and the adding portion 53. An output of the center position detecting portion 65 is input into a steering angle detecting portion 66, and the detected steering angle $\theta$ is input into the motor current correction value calculating portion 70. Also, a compensation value Ic from the motor characteristic compensating portion 64 is input into the adding portion 54, and a correction torque Tb from the motor current correction value calculating portion 70 is input into the adding portion 56.

The vehicle speed V input into the steering assist command value calculating portion 42 is obtained from a speed sensor or a Controller Area Network (CAN). The steering angle $\theta$ may be obtained from a steering angle sensor or a steering angle estimation, and the motor angular velocity $\omega$ may be obtained from a back electromotive force of the motor 60.

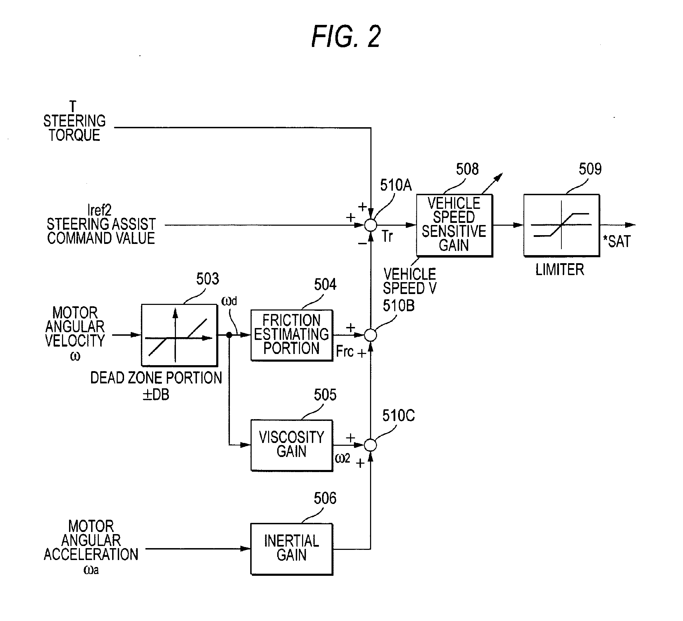

In order to improve a convergence of a yaw of the vehicle, the convergence controlling portion 51 applies a brake to a turning operation of the steering wheel based on the steering torque T and the motor angular velocity $\omega$. In this example, this controlling operation is of a vehicle speed sensitive type. The differentiation compensating portion 43 is constructed to implement the smooth steering operation by enhancing a response of a control around a neutral point of the steering wheel. The SAT estimation feedback portion 50 performs signal-processing on the estimated SAT estimation value *SAT by using the feedback filter, and gives appropriate road surface information to the steering wheel as a reaction force. That is, the SAT estimation feedback portion 50 executes the signal processing to the road surface information, disturbance, and the like in a frequency domain. This SAT estimation feedback portion 50 has a configuration shown in FIG.2. The steering torque T is input into an adding/subtracting portion 510 to add, and the steering assist command value Iref2 is input into the adding/subtracting portion 510A to add. Also, the motor angular velocity $\omega$ is input into a friction estimating portion 504 and a viscosity gain 505 via a dead zone portion 503 having a dead zone width $\pm$ DB. A friction Frc from the friction estimating portion 504 is input into an adding portion 510B, and an angular velocity $\omega 2$ from the viscosity gain 505 is input into an adding portion 510C. The motor angular acceleration $\omega_n$ is input into the adding portion 510C via an inertial gain 506, and the added result of the adding portion 510C is added to the friction Frc by the adding portion 510B. The added result is input into the adding/subtracting portion 510A to subtract A torque command value Tr as the added/subtracted result of the adding/subtracting portion 510A acts as the SAT estimation value *SAT through a vehicle speed sensitive gain 508 and a limiter 509.

As the mode of the torque generated between the road surface and the steering wheel, the steering torque T is generated when the driver turns the steering wheel, and the motor 60 generates an assist torque Tm in accordance with the steering torque T. As a result, the wheels are steered, and SAT is generated as a reaction force. At that time, the torque is generated as a resistance of the steering operation by inertia J, viscosity k, and friction (static friction) Fr of the motor 60. From the balance of these forces, an equation of motion is given by following Equation 1.

$$J \cdot \omega_a + k \cdot \omega + Fr \cdot sign(\omega) + SAT = Tm + T \qquad (1)$$

Here, following Equation 2 is given by applying the Laplace transform to Equation 1 at an initial value of zero and solving the result about SAT.

$$SAT(s) = Tm(s) + T(s) - (J \cdot \omega_a(s) + Fr \cdot sign(\omega(s)) + k \cdot \omega) \qquad (2)$$

As can be seen from Equation 2, when the inertia J, the viscosity k, and the static friction Fr of the motor 60 are obtained in advance as a constant value respectively, the SAT can be estimated by the motor angular velocity $\omega$, the motor angular acceleration $\omega_a$ the steering assist command value Iref2, and the steering torque T.

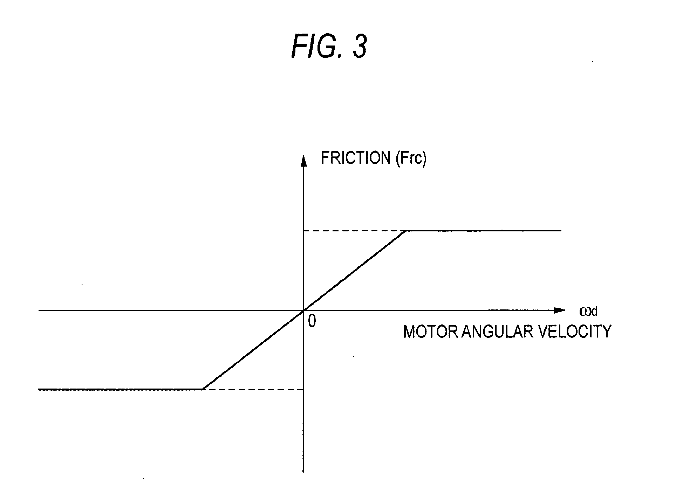

The dead zone portion 503 suppresses the characteristic around 0 of the motor angular velocity $\omega$, and a motor angular velocity $\omega d$ as an output of the dead zone portion 503 is gain-controlled by the friction estimating portion 504 and the viscosity gain 505. The dead zone portion 503 is provided to remove the influence of minute variation of the motor angular velocity $\omega$ during holding the steering wheel. As shown in FIG3, the characteristic of the friction estimating portion 504 is increased gradually in a range in which the motor angular velocity $\omega d$ is small, and has a constant value in a range that exceeds a predetermined value. Here, a viscous friction is not considered, but only a Coulomb's friction is considered. Since a discontinuity occurs in the Coulomb's friction at a zero point, the Coulomb's friction is changed gradually along the motor angular velocity $\omega d$ to reduce the discontinuity, as shown in FIG.3. In this case, the viscosity gain 505 of the viscosity as a reaction force generated by the speed has a constant value $\omega 2$.

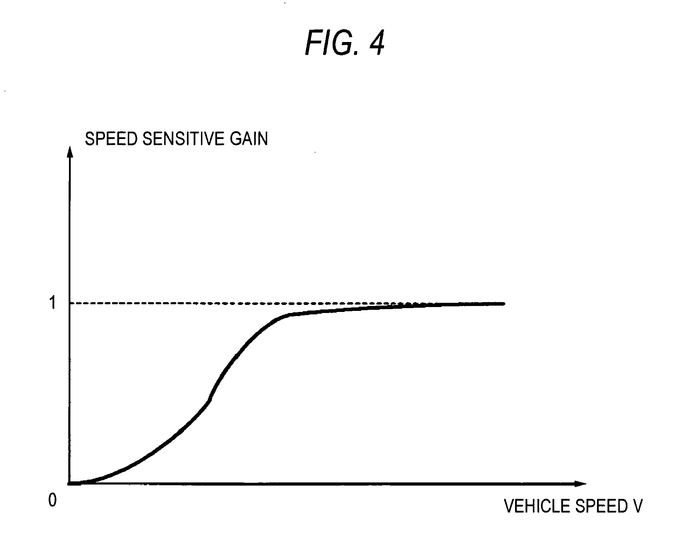

Also, the motor angular acceleration $\omega_a$ is gain-controlled by the inertial gain 506 that is a constant value, and is input into the adding portion 510C. An output of the adding/subtracting portion 510A is gain-controlled by the vehicle speed sensitive gain 508 having the speed sensitive characteristic as shown in FIG.4, and the SAT estimation value *SAT is output via the limiter 509 that limits a maximum value. The SAT estimation value *SAT estimated by the SAT estimation feedback portion 50 is input into the center position detecting portion 65 and is added to the current command value Iref4 by the adding portion 53.

The robust stabilization compensating portion 52 is a compensating portion disclosed in JP-A-8-290778. The robust stabilization compensating portion 52 removes a peak value of a resonance frequency of a resonance system consisting of an inertia element and a spring element contained in the detected torque, and compensates a phase displacement at the resonance frequency that disturbs a responsibility and a stability of the control system.

The center position detecting portion 65 detects a steering center position of the steering wheel in the straight line running state of the vehicle. When no friction is present in the steering system, the steering wheel returns to its center position by an action of SAT unless a steering force is applied after the steering wheel is turned. That is, the vehicle goes back to the straight line running state from the turning state, and the SAT becomes "0". When the friction is considered, the SAT becomes "0" unless the steering force is applied, but the steering wheel is stopped due to the balance between the friction and the SAT, That is, the vehicle does not go back to the complete straight line running state from the turning state. A following Equation 3 is derived from Equation 2.

$$SAT(s) = -Fr \cdot sign(\omega(s)) \qquad (3)$$

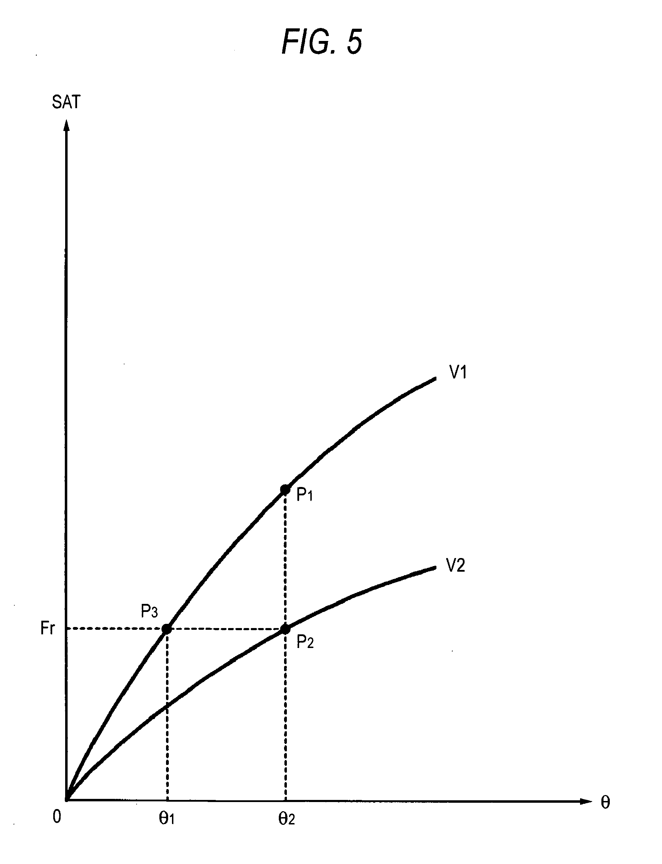

A relationship between the SAT based on the speed change and the steering angle is given as shown in FIG.5. An angle $\theta 2$ of the steering wheel from the center depends on a magnitude of the friction Fr (= SAT) at the same speed V2, and a displaced angle increases as the friction increases. However, the SAT increases (P2 → P1) at the same angle $\theta 2$ as the speed increases (V2 → V1). As can be seen from P2 → P3 in FIG.5, the displaced angle of the steering wheel from the center decreases ($\theta 1 < \theta 2$) when the speed increases (V1 > V2) at the same friction Fr. Therefore, the center position sensing portion 65 detects an angle $\theta$ of the steering wheel as a steering center position ($\theta = 0$) when the steering torque T is less than a predetermined value $T_0$ and also the straight line running state (|SAT estimation value *SAT| $\leq$ SAT$_0$)

is detected continuously for a predetermined time To in a condition that the vehicle speed V is in excess of a predetermined speed $V_0$.

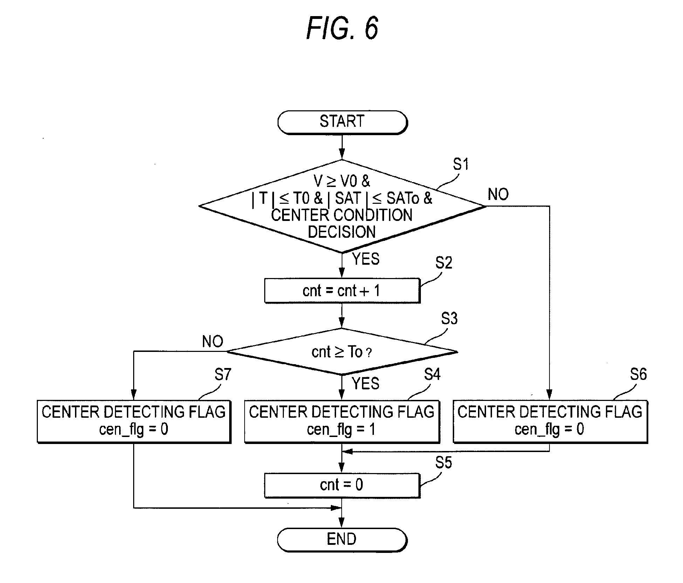

An example of the concrete detecting operation of a steering center position ($\theta = 0$) by the center position detecting portion 65 will be explained with reference to a flowchart in FIG.6 hereunder.

Firstly, the vehicle speed $V \geq V_0$, the steering torque $|T| \leq T_0$, and the straight line running $|SAT$ estimation value *SAT$| \leq SAT_0$ by the SAT (thresholds used to decide the center conditions) are decided as the center conditions (step S1). If all conditions are satisfied, a time counter "cnt" for detecting the center is incremented by "+1" (step S2). Then, it is decided whether or not a count value of the time counter "cnt" exceeds a center detecting threshold $T_0$ (step S3). If the count value of the time counter "cnt" exceeds the center detecting threshold $T_0$, a center detecting flag "cen_ flg =1" is set up (step S4). Then, the time counter "cnt" is reset (step S5). Then, the process is ended. If the count value of the time counter "cnt" is smaller than the center sensing threshold $T_0$, the center detecting flag "cen_flg" is reset (step S7). Then, the process is ended.

In contrast, if all conditions are not satisfied in step S1, the center detecting flag "cen_flg" is reset (step S6). Then, the time counter "cnt" is reset (step S5). Then, the process is ended. If the center detecting flag "cen_ flg" is set up, a center detecting signal CS is output from the center position detecting portion 65 and is input into the steering angle detecting portion 66.

The steering angle detecting portion 66 detects the steering angle (absolute steering angle) $\theta$ based on a motor rotation angle signal RS from the sensor fitted to the motor 60. In this case, an amount of change in a motor rotation angle $\Delta\theta m$ is obtained from the motor rotation angle signal RS. Also, an amount of change in the steering angle $\Delta\theta$ is derived as a function of the amount of change in the motor rotation angle $\Delta\theta m$ by following Equation 4, depending on a reduction gear ratio Gr (constant) between the motor shaft and the column shaft.

$$\Delta\theta = (1/Gr) \times \Delta\theta m = f(\Delta\theta m) \qquad (4)$$

However, since a mechanical mechanism is present between the motor shaft and the column shaft, damper, backlash, spring characteristic, etc. must be considered. Also, the steering angle $\theta$ is calculated by accumulating an amount of change in the steering angle $\Delta\theta$ from the steering angle $\theta = 0$ according to following Equation 5.

$$\theta(t) = \theta(t - T) + \Delta\theta(t) \qquad (5)$$

Here, $\theta(t - T)$ denotes a steering angle detected value prior to one sampling time, and the number of revolution N of the steering wheel is represented as a function that is indicated by a 360 degree multiple (cut off by floor) of $\theta(t)$ like a following Equation 6.

$$N = floor(\theta(t)/360) \qquad (6)$$

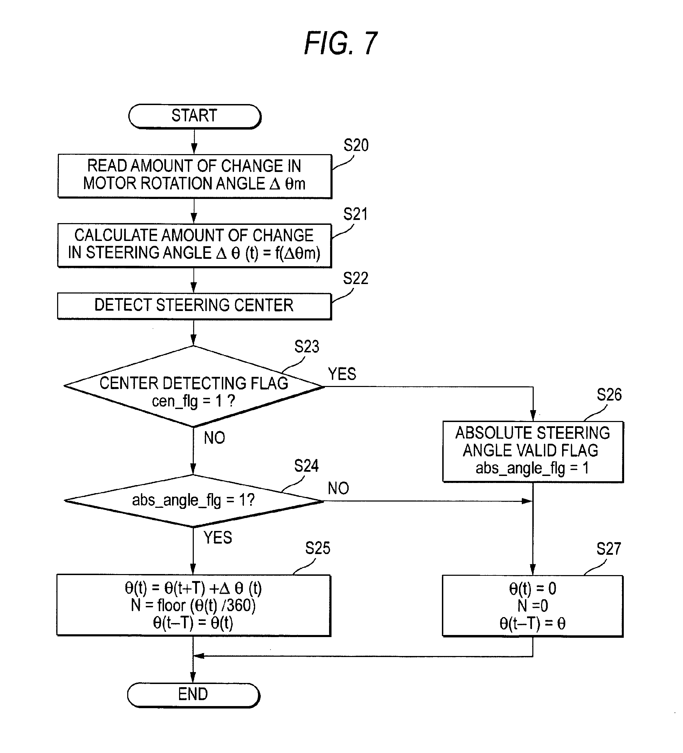

Next, a concrete example of the operation of the steering angle sensing portion 66 will be explained with reference to a flowchart in FIG.7 hereunder.

Firstly, all parameters are initialized, and the amount of change in a motor rotation angle $\Delta\theta m$ is read (step S20). Then, an amount of change in the steering angle $\Delta\theta(t) = f(\Delta\theta m)$ is calculated (step S21). Then, a steering center is detected by the steering center position detecting portion 66 (step S22). Then, it is decided whether or not a center detecting flag '"cen_flg" is set up, i.e., the center detecting signal CS is input (step S23). If the center detecting signal CS is not input, it is decided whether or not an absolute steering angle valid flag "abs_angle_flg" is set up (step S24). If the absolute steering angle valid flag "abs_angle_flg" is set up, calculations are made based on the above Equations 5 and 6 and $\theta(t - T) = \theta(t)$ is calculated (step S25). Then, the process is ended. Also, if the center detecting signal CS is input in step S23, the absolute steering angle valid flag "abs_angle_flg" is set up (step S26). Then, $\theta(t) = 0$, N - 0, and $\theta(t - T) = 0$ are set (step S27). Then, the process is ended Similarly, if the absolute steering angle valid flag "abs_angle_ flg" is not set up in step S24, $\theta(t) = 0$, N = 0, and $\theta(t-T)=0$ are set (step S27). Then, the process is ended.

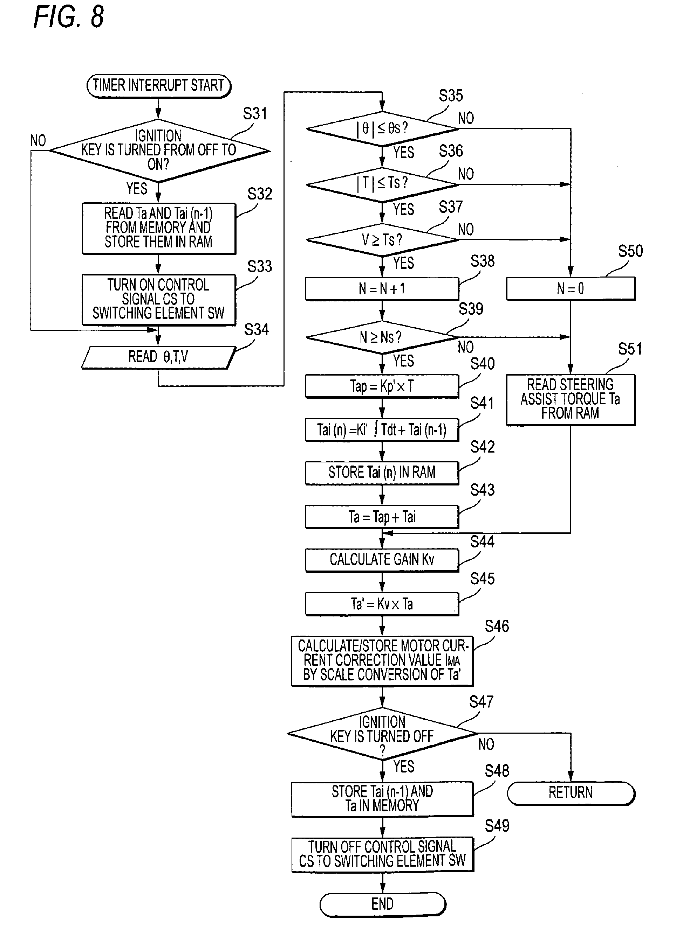

Next, an example of the operation of the motor current correction value calculating portion 70 will be explained with reference to a flowchart in FIG8 hereunder.

The calculation of the motor current correction value is executed as a timer interrupt process to a predetermined main program every predetermined time.

Firstly, it is decided whether or not an ignition key is turned from OFF to ON to turn ON a power supply (step S31). If the power supply is turned ON, a steering assist torque correction value integral component Tai(n-1) and a steering assist torque correction value Ta are read from a memory (e.g., EEPROM) and stored in an integral component memory area and a torque correction value memory area formed in the memory such as RAM, or the like (step S32). Then, a control signal CS to turn ON a switching element SW of a self-hold circuit is output (step S33). Then, the steering angle θ, the steering torque T, and the vehicle speed V are read (step S34). In contrast, if the power supply is not turned ON in step S31, the steering angle θ, the steering torque T, and the vehicle; speed V are read directly.

Then, it is decided whether or not an absolute value |θ| of the steering angle θ is equal to or less than a predetermined value θs that is set previously to decide the straight line running state of the vehicle (step S35). If the absolute value |θ| is equal to or less than the predetermined value θs, it is decided that such a possibility is high that the vehicle is in the straight line running state. Then, it is decided whether or not an absolute value |T| of the steering torque T is equal to or less than a predetermined value Ts that is set previously to decide the straight line running state of the vehicle (step S36). If the absolute value |T| is equal to or less than the predetermined value Ts, it is decided that such a possibility is high that the vehicle is in the straight line running state. Then, it is decided whether or not the vehicle speed V is equal to or more than a predetermined value Vs that is set previously to decide the straight line running state of the vehicle (step S37). Then, if the vehicle speed V is equal to or more than the predetermined value Vs, it is decided that such a possibility is high that the vehicle is in the straight line running state, and the subsequent process is executed

Then, the count value N indicating a continued time of the straight line running state is incremented by "+1" (step S38). Then, it is decided whether or not the count value N is equal to or more than a set value Ns that is set previously (step S39). If the count value N is equal to or larger than the set value Ns, a calculation in following Equation 7 is carried out based on the present steering torque T, and thus a steering assist torque correction value proportional component Tap is calculated (step S40).

$$\mathrm{Tap} = \mathrm{Kp'} \times \mathrm{T} \qquad (7)$$

Then, a calculation in following Equation 8 is carried out based on the present steering torque T, and thus a steering assist torque correction value integral component Tai is calculated (step S41).

$$\mathrm{Tai(n)} = \mathrm{Ki'} \cdot \int \mathrm{Tdt} + \mathrm{Tai(n-1)} \qquad (8)$$

Here, Tai(n-1) represents the steering assist torque correction value integral component in the preceding step as an integral initial value.

Then, the steering assist torque correction value integral component Tai(n) calculated here is stored in an integral component preceding value memory area formed as the steering assist torque correction value integral component Tai(n-1) in one preceding calculation, i.e., an integral initial value in the memory (step S42). Then, a steering assist torque correction value Ta is calculated by a following Equation 9, and is stored in the torque correction value memory area of the memory (step S43).

$$\mathrm{Ta} = \mathrm{Tap} + \mathrm{Tai} \qquad (9)$$

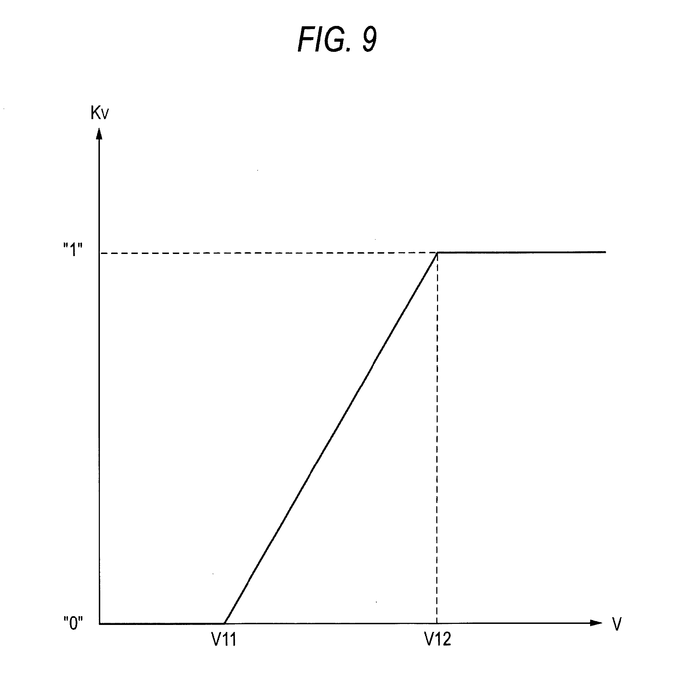

Then, a gain Kv is calculated by looking up a gain calculation map shown in FIG.9 based on the vehicle speed V (step S44). Here, as shown in FIG9, the gain calculation map is set such that the gain Kv is set to 0 until the vehicle speed V reaches a first set value V11 from 0, the gain Kv is increased continuously from 0 to 1 in response to an increase of the vehicle speed V until the vehicle speed V reaches a second set value V12 from the first set value V11, and the gain Kv is kept at 1 when the vehicle speed V exceeds the second set value V12.

Then, a steering assist torque correction value Ta' (= Kv × Ta) is calculated by multiplying the steering assist torque correction value Ta by the gain Kv (step S45). Then, a motor current correction value $I_{MA}$ is calculated by converting the calculated steering assist torque correction value Ta' into a current value corresponding to a motor current command value, and then stored in the motor current correction value memory area of the memory (step S46). Them it is decided whether or not an ignition key is turned OFF (step S47). If the ignition key is in an ON state, the process returns to a main program. Then, if the ignition key is in an OFF state, the steering assist torque correction value integral component Tai(n-1) and the steering assist torque correction value Ta stored in the memory at that point of time are stored in the integral component memory area and the torque correction value memory area of the memory (step S48). It is decided that the control signal CS to the switching element SW of the self hold circuit is in the OFF state, and the self holding is released (step S49). Then, the timer interrupt process is ended.

In contrast, if it is decided in step S35 that $|\theta|> \theta s$, or if it is decided in step S36 that $|T| > Ts$, or if it is decided in step S37 that $V<Vs$, the count value N is reset to 0 (step S50). Then, the steering assist torque correction value Ta is read from the memory, and the process goes to above step S44 (step S51). Also, if it is decided in step S39 that $N < Ns$, the steering assist torque Ta is read from the memory, and the process goes to above step S44 (step S51).

As described above, when it is detected that the vehicle is in the straight line running state, the offset torque that is input into the steering system from the vehicle body side or the road surface side is detected by the offset torque detecting portion, a motor current value $I_{MA}$ used to correct the motor current command value is calculated by the command value correcting portion based on the detected offset torque, and the motor current command value calculated by the driving controlling portion is corrected using the motor current value $I_{MA}$ Therefore, the steering assisting force is generated to cancel the offset torque that is input into the steering system from the road surface or the vehicle body side in the straight line running state when either the air pressure in the tire is different between left and right wheels or the vehicle travels on the road surface that is inclined in the road width direction or the split-$\mu$ road surface whose coefficient of friction is different between the left and right wheels, and the straight line stability of the vehicle can be ensured. In addition, when the steering assist torque correction value is stored in advance in a nonvolatile storing portion, the motor current command value can be corrected immediately after the vehicle starts the running and thus the running stability can be ensured.

However, the torque onset caused by factors except the steering system in the straight line running state is not taken into consideration. Further, when the torque applied to the column shaft in the straight line running state is regarded as the offset torque, such torque is also regarded as the offset torque even in a state that the input from the steering wheel is balanced with the friction of the steering mechanism. For this reason, it is feared that the wrong torque is calculated as the correction torque.

Therefore, in the present invention, the motor current correction value $I_{MA}$ is calculated by using the SAT estimation value *SAT or the SAT detection value, i.e., by regarding the SAT as the offset torque. As a result, the steering function can be improved much more by calculating the more precise correction current command value.

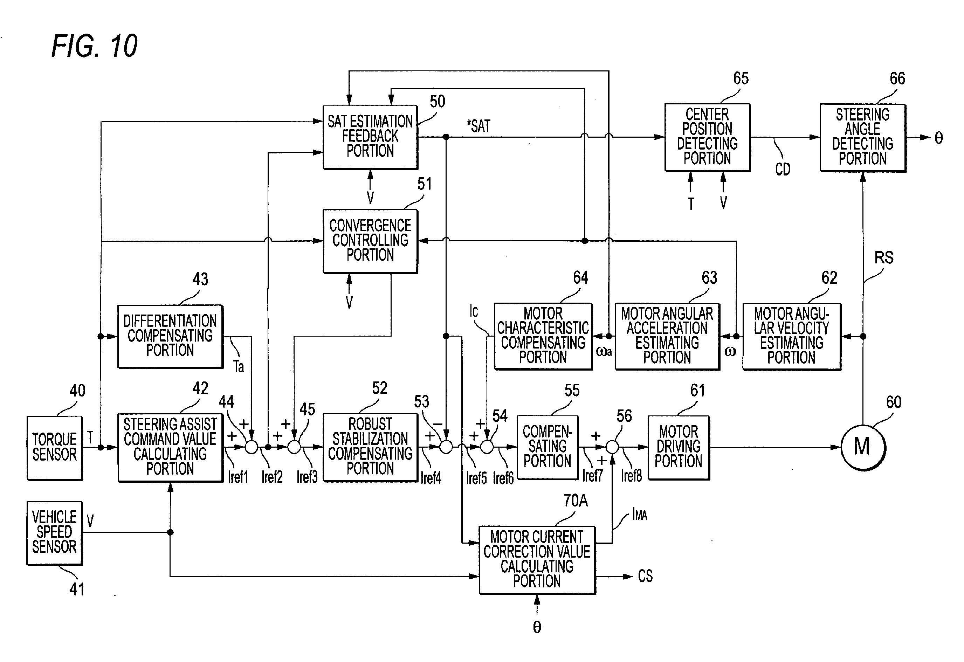

FIG. 10 shows an example of a configuration of the control system according to the present invention, which corresponds to FIG1. In the present invention, the SAT estimation value *SAT output from the SAT feedback estimating portion 50 is input into a motor current correction value calculating portion 70A, but the steering torque T is not input into the motor current correction value calculating portion 70A Other configurations and operations are similar to those in FIG. 1.

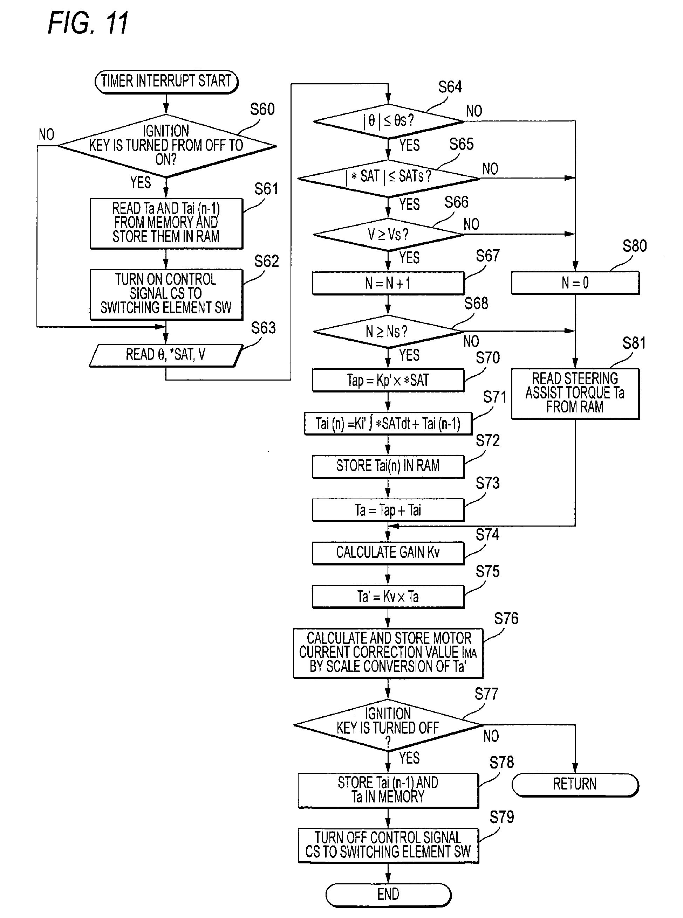

An example of an operation of the motor current correction value calculating portion 70A will be explained with reference to a flowchart in FIG 11 hereunder.

Firstly, it is decided whether or not an ignition key is turned ON to turn ON a power supply (step S60). If the power supply is in its ON state, the steering assist torque correction value integral component Tai(n-1) and the steering assist torque correction value Ta stored in a memory are read from the memory, and then store them in the memory (step S61). Then, the control signal CS to turn ON the switching element SW of the self-hold circuit is output (step S62). Then, the steering angle $\theta$, the SAT estimation value $*$SAT, and the vehicle speed V are read (step S63). In contrast, if the power supply is not in its ON state in step S60, the steering angle $\theta$, the SAT estimation value $*$SAT, and the vehicle speed V are read directly.

Then, it is decided whether or not an absolute value $|\theta|$ of the steering angle $\theta$ is equal to or less than a predetermined value $\theta s$ that is set previously to decide the straight line running state of the vehicle (step S64). If the absolute value $|\theta|$ is equal to or less than the predetermined value $\theta s$, it is decided that such a possibility is high that the vehicle is in the straight line running state, Then, it is decided whether or not an absolute value $|*SAT|$ of the SAT estimation value $*$SAT is equal to or less than a predetermined value SATs that is set previously to decide the straight line running state of the vehicle (step S65). If the absolute value $|*SAT|$ is equal to or less than the predetermined value $*$SATs, it is decided that such a possibility is high that the vehicle is in the straight line running state. Then, it is decided whether or not the vehicle speed V is equal to or more than a predetermined value Vs that is set previously to decide the straight line running state of the vehicle (step S66). Then, if the vehicle speed V is equal to or more than the predetermined value Vs, it is decided that such a possibility is high that the vehicle is in the straight line running state, and the subsequent process is executed

Then, the count value N indicating a continued time of the straight line running state is incremented by "+1" (step S67). Then, it is decided whether or not the count value N is equal to or more than a set value Ns (step S68). If the count value N is smaller than the set value Ns, a calculation in following Equation 10 is carried out based on the present SAT estimation value ∗SAT, and thus a steering assist torque correction value proportional component Tap is calculated (step S70).

$$\text{Tap} = \text{Kp'} \times \text{∗SAT} \qquad (10)$$

Then, an integrating calculation in following Equation 11 is carried out based on the present SAT estimation value ∗SAT, and thus the steering assist torque correction value integral component Tai(n) is calculated (step S71).

$$\text{Tai(n)} = \text{Ki'} \cdot \int \text{∗SAT} dt + \text{Tai(n} - 1) \qquad (11)$$

Then, the calculated steering assist torque correction value integral component Tai(n) is stored in the memory as the integral initial value (step S72). Then, the steering assist torque correction value Ta is calculated by above Equation 9, and is stored in the memory (step S73).

Then, like the above, the gain Kv is calculated based on the vehicle speed V (step S74).

Then, the steering assist torque correction value Ta' is calculated by multiplying the calculated steering assist torque correction value Ta by the gain Kv (step S75). Then, the motor current correction value $I_{MA}$ is calculated by converting the calculated steering assist torque correction value Ta' into a current value, and then stored in the memory (step S76). Then, it is decided whether or not the ignition key is turned OFF (step S77). If the ignition key is in its ON state, the process is returned. If the ignition key is in its OFF state, the steering assist torque correction value integral component Tai(n-1) and the steering assist torque correction value Ta at that point of time are stored in the memory (step S78). Then, it is decided that the control signal CS to the switching element SW of the self hold circuit is in the OFF state, and the self holding is released (step S79). Then, the timer interrupt process is ended.

In contrast, if it is decided in step S64 that $|\theta| > \theta s$, or if it is decided in step S65 that $|\text{∗SAT}| > \text{SATs}$, or if it is decided in step S66 that $V < Vs$, the count value N is reset to 0 (step S80). Then, the steering assist torque is read from the memory, and the process goes to above step S74 (step S81). Also, if it is decided in step S68 that $N < Ns$, the steering assist torque is read from the memory (step S81), and the process goes to above step S74.

As described above, according to the present invention, the steering input and the offset input can be separated by estimating the onset torque generated by a vehicle factor, or the like by virtue of the SAT. As a result, only the offset torque generated by an external force can be corrected.

In the above explanation, the SAT estimation value ∗SAT is utilized in deciding the straight line running of the vehicle (the steering angle θ, the SAT estimation value ∗SAT, and the vehicle speed V). But the straight line running of the vehicle may be decided by the steering torque T (the steering angle θ, the steering torque T, and the vehicle speed V). Also, in the above explanation, the SAT is estimated by the SAT estimation feedback portion, but the SAT detected value detected by the SAT sensor can be employed.

The present application is based upon Japanese Patent Application No. 2006-129331, filed on May 8, 2006, the contents of which are incorporated herein by reference.

ENGLISH TRANSLATION OF LEGENDS OF THE DRAWINGS

FIG.1:

| 40 | torque sensor |
| 41 | vehicle speed sensor |
| 42 | steering assist command value calculating portion |
| 43 | differentiation compensating portion |
| 50 | SAT estimation feedback portion |
| 51 | convergence controlling portion |
| 52 | robust stabilization compensating portion |
| 55 | compensating portion |
| 61 | motor driving portion |

62    motor angular velocity estimating portion
63    motor angular acceleration estimating portion
64    motor characteristic compensating portion
65    center position detecting portion
66    steering angle detecting portion
70    motor current correction value calculating portion

FIG2:

T       steering torque
Iref2    steering assist command value
$\omega$       motor angular velocity
$\omega_n$      motor angular acceleration
503    dead zone portion
504    friction estimating portion
505    viscosity gain
506    inertial gain
508    vehicle speed sensitive gain
509    limiter

FIG3:

#1    motor angular velocity $\omega_d$
#2    friction (Frc)

FIG.4:

#1    vehicle speed V
#2    speed sensitive gain

FIG.6:

#1    start
S1    V≥V0 & |T| ≤T0 &| SAT|≤ SAT & center condition derision
S4    center detecting flag cen_flg=1
S6    center detecting flag cen_flg = 0
S7    center detecting flag cen_flg = 0
#2    end

FIG7:

#1    start
S20    read amount of change in motor rotation angle $\Delta\theta m$
S21    calculate amount of change in steering angle $\Delta\theta(t) = f(\Delta\theta m)$
S22    detect steering center
S23    Center detecting flag cen_fig = 1 ?
S26    absolute steering angle valid flag abs_angle_fig = 1
#2    end

FIG8:

#1    timer interrupt start
S31    Ignition key is turned from OFF to ON?
S32    read Ta and Tai(n-1) from memory and store them in RAM
S33    turn ON control signal CS to switching element SW
S34    read $\theta$,T,V
S42    store Tai(n) in RAM
S44    calculate gain Kv

S46    calculate/store motor current correction value $I_{MA}$ by scale conversion of Ta'

S47    Ignition key is turned OFF ?

S48    store Tai(n-1) and Ta in memory

S49    turn OFF control signal CS to switching element SW

S51    read steering assist torque Ta from RAM

#2    return

#3    end

FIG. 10:

40    torque sensor

41    vehicle speed sensor

42    steering assist command value calculating portion

43    differentiation compensating portion

50    SAT estimation feedback portion

51    convergence controlling portion

52    robust stabilization compensating portion

55    compensating portion

61    motor driving portion

62    motor angular velocity estimating portion

63    motor angular acceleration estimating portion

64    motor characteristic compensating portion

65    center position detecting portion

66    steering angle detecting portion

70A    motor current correction value calculating portion

FIG11:

#1    timer interrupt start

S60    Ignition key is turned from OFF to ON ?

S61    read Ta and Tai(n-1) from memory and store them in RAM

S62    turn ON control signal CS to switching element SW

S63    read θ,∗SAT,V

S72    store Tai(n) in RAM

S74    calculate gain Kv

S76    calculate and store motor current correction value $I_{MA}$ by scale conversion of Ta'

S77    Ignition key is turned OFF ?

S78    store Tai(n-1) and Ta in memory

S79    turn OFF control signal CS to switching element SW

S81    read steering assist torque Ta from RAM

#2    return

#3    end

FIG 12:

3    reduction gear

10    torque sensor

12    vehicle speed sensor

14    battery

20    motor

30    control unit

FIG13;

T    steering torque

V    speed

32    phase compensating portion

35    differentiation compensating portion

| 38 | inverter |
| #1 | steering torque |
| #2 | basic steering assist command value |
| #3 | speed low |
| #4 | speed middle |
| #5 | speed high |

**Claims**

1. A control system for an electronic power steering that drives and controls a motor by feedback control the control system comprising:

   a steering assist command value calculating portion for calculating and outputting a current command value of the motor, which applies a steering assisting force to a steering mechanism, based on a steering torque and a vehicle speed;
   a SAT estimating portion for estimating a SAT of a vehicle by inputting an angular velocity and an angular acceleration of the motor, the steering torque, and the current command value; and
   a motor current correction value calculating portion for deciding a running state of the vehicle based on a SAT estimation value estimated by the SAT estimating portion, the vehicle speed, and a steering angle, and correcting the current command value by calculating a motor current correction value based on the SAT estimation value in accordance with the running state.

2. The control system according to claim 1, wherein
   the motor current correction value calculating portion is configured to:

   decide a steering state by deciding a straight running state; and
   calculate the motor current correction value after a predetermined time elapsed in a case where the steering angle is equal to or less than a predetermined value 1, an absolute value of the SAT estimation value is equal to or less than a predetermined value 2, and the vehicle speed is equal to or more than a predetermined value 3.

3. The control system according to claim 1, wherein the motor current correction value calculating portion is configured to:

   decide the running state using the steering torque instead of the SAT estimation value

4. A control system for an electronic power steering that drives and controls a motor by feedback control, the control system comprising:

   a steering assist command value calculating portion for calculating and outputting a current command value of the motor, which applies a steering assisting force to a steering mechanism, based on a steering torque and a vehicle speed;
   a SAT sensor for detecting a SAT of a vehicle; and
   a motor current correction value calculating portion for deciding a running state of the vehicle based on a SAT value detected by the SAT sensor, the vehicle speed, and a steering angle, and correcting the current command value by calculating a motor current correction value based on the SAT value in accordance with the running state.

5. The control system according to claim 4, wherein the motor current correction value calculating portion is configured to:

   decide a steering state by deciding a straight running state; and
   calculate the motor current correction value after a predetermined time elapsed in a case where the steering angle is equal to or less than a predetermined value 1, an absolute value of the SAT value is equal to or less than a predetermined value 2, and the vehicle speed is equal to or more than a predetermined value 3.

6. The control system according to claim 4, wherein the motor current correction value calculating portion is configured to:

decide the running state using the steering torque instead of the SAT value.

*FIG. 1*

# FIG. 2

T
STEERING
TORQUE

Iref2
STEERING ASSIST
COMMAND VALUE

510A

508
VEHICLE
SPEED
SENSITIVE
GAIN

509

*SAT

LIMITER

Tr

VEHICLE
SPEED V
510B

503
ωd

MOTOR
ANGULAR
VELOCITY
ω

DEAD ZONE PORTION
±DB

504
FRICTION
ESTIMATING
PORTION

Frc

505
VISCOSITY
GAIN

ω2

510C

506
INERTIAL
GAIN

MOTOR
ANGULAR
ACCELERATION
ωa

# FIG. 3

FRICTION (Frc)

ωd
MOTOR ANGULAR VELOCITY

# FIG. 4

SPEED SENSITIVE GAIN

1

0

VEHICLE SPEED V

# FIG. 5

EP 2 039 589 A1

## FIG. 6

START

S1
V ≥ V0 &
| T | ≤ T0 & | SAT | ≤ SATo &
CENTER CONDITION
DECISION
NO

YES

S2
cnt = cnt + 1

S3
cnt ≥ To ?

NO

YES

S7
CENTER DETECTING FLAG
cen_flg = 0

S4
CENTER DETECTING FLAG
cen_flg = 1

S6
CENTER DETECTING FLAG
cen_flg = 0

S5
cnt = 0

END

# FIG. 7

```
                    ┌─────────────┐
                    │    START    │
                    └─────────────┘
                           │
                           ▼                          S20
        ┌──────────────────────────────────┐
        │  READ AMOUNT OF CHANGE IN        │
        │  MOTOR ROTATION ANGLE Δθm        │
        └──────────────────────────────────┘
                           │
                           ▼                          S21
        ┌──────────────────────────────────┐
        │  CALCULATE AMOUNT OF CHANGE      │
        │  IN STEERING ANGLE Δθ(t) = f(Δθm)│
        └──────────────────────────────────┘
                           │
                           ▼                          S22
        ┌──────────────────────────────────┐
        │     DETECT STEERING CENTER       │
        └──────────────────────────────────┘
                           │
                           ▼                   S23
                   ╱──────────────╲       YES
                  ╱ CENTER DETECTING ╲─────────────┐
                  ╲  FLAG cen_flg = 1?╱             │
                   ╲──────────────╱                 ▼           S26
                           │ NO           ┌──────────────────────┐
                           │              │ ABSOLUTE STEERING    │
                           │              │ ANGLE VALID FLAG     │
                           │              │ abs_angle_flg = 1    │
                           ▼       S24    └──────────────────────┘
                   ╱──────────────╲   NO             │
                  ╱ abs_angle_flg   ╲────────────────┤
                  ╲    = 1?         ╱                 │
                   ╲──────────────╱                  │
                           │ YES                     │
                           ▼         S25             ▼          S27
        ┌──────────────────────────┐   ┌──────────────────────┐
        │ θ(t) = θ(t+T) +Δθ(t)     │   │ θ(t) = 0             │
        │ N = floor (θ(t) /360)    │   │ N = 0                │
        │ θ(t−T) = θ(t)            │   │ θ(t−T) = θ           │
        └──────────────────────────┘   └──────────────────────┘
                           │                         │
                           ◄─────────────────────────┘
                           ▼
                    ┌─────────────┐
                    │    END      │
                    └─────────────┘
```

# FIG. 8

```
           ┌──────────────────────┐
           │ TIMER INTERRUPT START │
           └──────────────────────┘
                     │
          ┌──────────────────┐  S31
     NO  ╱   IGNITION         ╲
    ◄────  KEY IS TURNED FROM OFF TO
          ╲      ON?          ╱
           └──────────────────┘
                  │ YES
          ┌──────────────────┐ S32
          │ READ Ta AND Tai (n-1) │
          │ FROM MEMORY AND  │
          │ STORE THEM IN RAM │
          └──────────────────┘
                  │
          ┌──────────────────┐ S33
          │ TURN ON CONTROL  │
          │ SIGNAL CS TO     │
          │ SWITCHING ELEMENT SW │
          └──────────────────┘
                  │              S34
          ┌──────────────────┐
          │   READ  θ,T,V    │
          └──────────────────┘
```

S35
$|\theta| \leq \theta s?$ — NO

S36
$|T| \leq Ts?$ — NO

S37
$V \geq Ts?$ — NO

S38
$N = N + 1$

S39
$N \geq Ns?$ — NO

S40
$Tap = Kp' \times T$

S41
$Tai\,(n) = Ki' \int Tdt + Tai\,(n-1)$

S42
STORE Tai (n) IN RAM

S43
$Ta = Tap + Tai$

S44
CALCULATE GAIN Kv

S45
$Ta' = Kv \times Ta$

S46
CALCULATE/STORE MOTOR CURRENT CORRECTION VALUE IMA BY SCALE CONVERSION OF Ta'

S47
IGNITION KEY IS TURNED OFF? — NO

S48
STORE Tai (n-1) AND Ta IN MEMORY

S49
TURN OFF CONTROL SIGNAL CS TO SWITCHING ELEMENT SW

END

S50
$N = 0$

S51
READ STEERING ASSIST TORQUE Ta FROM RAM

RETURN

# FIG. 9

*FIG. 10*

EP 2 039 589 A1

## FIG. 11

```
         ┌─────────────────────┐
         │ TIMER INTERRUPT START│
         └─────────────────────┘
                   │
                   ▼
              ╱─────────╲  S60
         NO  ╱  IGNITION  ╲
      ┌─────< KEY IS TURNED >
      │      ╲FROM OFF TO ON?╱
      │       ╲─────────────╱
      │            │ YES
      │            ▼
      │   ┌──────────────────┐ S61
      │   │ READ Ta AND Tai(n-1)│
      │   │ FROM MEMORY AND   │
      │   │ STORE THEM IN RAM │
      │   └──────────────────┘
      │            │
      │            ▼
      │   ┌──────────────────┐ S62
      │   │ TURN ON CONTROL  │
      │   │ SIGNAL CS TO     │
      │   │ SWITCHING ELEMENT SW│
      │   └──────────────────┘
      │            │
      │            ▼
      │   ┌──────────────────┐ S63
      └──▶│  READ θ, *SAT, V │
          └──────────────────┘
```

S64  $|\theta| \leq \theta s$ ? — NO

YES

S65  $|*SAT| \leq SATs$ ? — NO

YES

S66  $V \geq Vs$ ? — NO

YES

S67  $N = N + 1$

S68  $N \geq Ns$ ? — NO

YES

S70  $Tap = Kp' \times *SAT$

S71  $Tai(n) = Ki' \int *SATdt + Tai(n-1)$

S72  STORE Tai(n) IN RAM

S73  $Ta = Tap + Tai$

S80  $N = 0$

S81  READ STEERING ASSIST TORQUE Ta FROM RAM

S74  CALCULATE GAIN Kv

S75  $Ta' = Kv \times Ta$

S76  CALCULATE AND STORE MOTOR CURRENT CORRECTION VALUE IMA BY SCALE CONVERSION OF Ta'

S77  IGNITION KEY IS TURNED OFF ? — NO

YES

S78  STORE Tai(n-1) AND Ta IN MEMORY

RETURN

S79  TURN OFF CONTROL SIGNAL CS TO SWITCHING ELEMENT SW

END

# FIG. 12

EP 2 039 589 A1

FIG. 13

EP 2 039 589 A1

<table>
<tr><td colspan="2"><strong>INTERNATIONAL SEARCH REPORT</strong></td><td>International application No.<br>PCT/JP2007/058875</td></tr>
</table>

| A. CLASSIFICATION OF SUBJECT MATTER |
|---|
| *B62D6/00*(2006.01)i, *B62D5/04*(2006.01)i |

According to International Patent Classification (IPC) or to both national classification and IPC

| B. FIELDS SEARCHED |
|---|

Minimum documentation searched (classification system followed by classification symbols)
B62D6/00, B62D5/04

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y<br>A | JP 2001-39324 A  (Kayaba Industry Co., Ltd.),<br>13 February, 2001 (13.02.01),<br>Full text; all drawings<br>& US 2003/0106736 A1 | 1,3,4,6<br>2,5 |
| Y<br>A | JP 2002-274405 A  (NSK Ltd.),<br>25 September, 2002 (25.09.02),<br>Full text; all drawings<br>(Family: none) | 1,3,4,6<br>2,5 |
| Y<br>A | JP 2001-88723 A  (Mazda Motor Corp.),<br>03 April, 2001 (03.04.01),<br>Full text; all drawings<br>(Family: none) | 1,3,4,6<br>2,5 |

☒ Further documents are listed in the continuation of Box C.   ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>26 June, 2007 (26.06.07) | Date of mailing of the international search report<br>10 July, 2007 (10.07.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/058875

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2006-44505 A  (Honda Motor Co., Ltd.),<br>16 February, 2006 (16.02.06),<br>Full text; all drawings<br>(Family: none) | 1,3,4,6<br>2,5 |
| A | JP 2005-349914 A  (Honda Motor Co., Ltd.),<br>22 December, 2005 (22.12.05),<br>Full text; all drawings<br>(Family: none) | 1-6 |
| A | JP 2005-112008 A  (Toyoda Machine Works, Ltd.),<br>28 April, 2005 (28.04.05),<br>Full text; all drawings<br>(Family: none) | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001039324 A
- JP 8290778 A
- JP 2006129331 A